Europäisches Patentamt

European Patent Office

Office européen des brevets

(11) Publication number : **0 472 396 A1**

# EUROPEAN PATENT APPLICATION

(21) Application number : **91307639.4**

(51) Int. Cl.⁵ : **G01C 15/00**

(22) Date of filing : **19.08.91**

(30) Priority : **22.08.90 ZA 906668**

(43) Date of publication of application :
**26.02.92 Bulletin 92/09**

(84) Designated Contracting States :
**AT BE CH DE DK ES FR GB GR IT LI LU NL SE**

(71) Applicant : **ELOPTRO (PROPRIETARY)
LIMITED
Cnr Atlas and De Havilland Road
Kempton Park, Transvaal (ZA)**

(72) Inventor : **De Kock, Emile Michael
79 Kirby Beller Road, Glenvista
Johannesburg, Transvaal (ZA)**

(74) Representative : **Allden, Thomas Stanley et al
A.A. THORNTON & CO. Northumberland
House 303-306 High Holborn
London WC1V 7LE (GB)**

(54) **Optical tool placement device.**

(57)    The invention relates to a tool positioning aid for positioning a tool, such as a drilling rig. Image superimposing means (29) are provided for superimposing a virtual image (101) of a drill position indicating pattern (56) onto a blast face (14). The image superimposing means (29) includes a first patterned screen (54), having a drill position indicating pattern (56) formed thereon. A second beam splitter screen (50) is interposed in the line of sight between the working end (28) of the drill (22) and an operator (32) thereof. Projection means, which includes a light source (70) and a lens arrangement (62) are provided for projecting an image (101) of the first screen (54) onto the second screen (50) such that the drill position indicating pattern (56) appears to be superimposed on the blast face (14) when viewed by the operator (32) along the line of sight (30). An alignment mechanism (38,40,42,44) is used to align the virtual image (101) with a reference mark (20) on the blast face (14). The invention extends to a method of positioning a tool on a workpiece.

EP 0 472 396 A1

$\boxed{=}3$

## BACKGROUND TO THE INVENTION

This invention relates to an optical tool positioning aid.

The invention will be described with reference to the placement or positioning of mechanised rock drilling tools in underground mining. It will be appreciated, however, that this is done purely by way of example and that it is not intended to limit the invention in any way.

In haulage blasting in underground mining, relatively large quantities of rock need to be blasted accurately along predetermined survey lines. In known methods, a surveyor's reference line is established by means of line-of-sight markers or by means of laser beam projectors.

Using the reference mark or line, a qualified miner will mark a blasting pattern on the advancing haulage rock face. This is typically done with the use of an overhead projector and transparency which projects the appropriately positioned markings onto the rock face. Prior to the removal of the projector, the projected marks are confirmed with paint marks superimposed thereupon and blast holes can then be drilled on the paint marks. In modern underground mining, drilling rigs using one or more rock drills mounted on articulated booms are used to drill the holes. The greatest difficulty encountered with this procedure is to be found in setting up the overhead projector for the correct projection of the drilling marks onto the rock face relative to the surveyor's reference. Furthermore, the projector needs to be removed each time drilling and blasting takes place. In addition, the paint markings tend to disappear due to flaking of the rock during drilling so that the actual drilling pattern is very often merely an approximation of the drill pattern required.

It is an object of this invention to alleviate these problems

## SUMMARY OF THE INVENTION

According to the invention there is provided a tool positioning aid comprising:

a) image superimposing means for superimposing a virtual image of a tool position indicating pattern onto a workpiece, the image superimposing means including;

i a first screen, having a tool position indicating pattern formed thereon;

ii a second screen for interposition in the line of sight between the working end of the tool and an operator thereof;

iii projection means for projecting an image of the first screen onto the second screen such that the tool position indicating pattern appear to be superimposed on the workpiece when viewed by the operator along the line of sight;

b) an alignment mechanism for aligning the virtual image with a reference mark on the workpiece.

The first screen may be a patterned screen, and the second screen may be a beam splitter screen.

Preferably, the projection means includes a light source positioned behind the patterned screen and an arrangement of lenses located in front of the patterned screen for focusing the image of the patterned screen onto the beam splitter screen.

The pattern screen conveniently includes at least one alignment mark for aligning the tool position indicating image with a corresponding reference mark on the workpiece.

A viewing window is preferably provided along the line of sight a predetermined distance away from the beam splitter screen, and the focusing means are adjusted so that the virtual image appears to lie in a focal plane which is substantially co-planar with a plane in which the workpiece lies, when the operator views the virtual image through the viewing window.

The alignment mechanism may be constituted by a mounting arrangement for allowing swivelling of the beam splitter screen in all directions, and locking means for releasably locking the mounting arrangement relative to a fixture.

The tool may be a drilling rig, and the workpiece may be a blast face, in which case the position indicating pattern is a blast pattern indicating the position of blast holes.

A plurality of patterned screens are advantageously provided, each screen having a pattern of a different configuration and/or a different magnitude in order to cater for varying distances of the tool from the workpiece.

The invention extends to a method of positioning a tool comprising the steps of:

a) superimposing a virtual image of a tool position indicating pattern onto a workpiece, by:

i) selecting a first screen having a tool position indicating pattern formed therein;

ii) interposing a second screen in the line of sight between the working end of the tool and an operator thereof;

iii) projecting an image of the first screen onto the second screen such that the tool position indicating pattern appears to be superimposed on the workpiece when viewed by the operator along the line of sight; and

b) positioning the working end of the tool in accordance with the image of the tool position indicating pattern.

Preferably, the method includes the further steps of providing a reference mark on the workpiece, and aligning the virtual image of the tool indicating pattern with the reference mark prior to positioning of the working end of the tool.

Conveniently, the method further includes the reiterative steps of positioning the working end of the tool in accordance with a point defined by the virtual image of the tool indicating pattern, advancing the working end of the tool into the workpiece, and repositioning the working end of the tool in accordance with a further point defined by the virtual image of the tool indicating pattern.

Advantageously, the method may include the initial steps of measuring the distance between the workpiece and the second, or beam splitter screen, and selecting a first, or patterned screen in accordance with the measured distance.

Where the tool is a drilling rig, and the position indicating pattern is a blast pattern for indicating a position of blast holes to be drilled in a rock face, the method may include the further step of checking the position of the drilled blast holes using the virtual image of the tool position indicating pattern prior to charging of the holes.

## BRIEF DESCRIPTION OF THE DRAWINGS

Figure 1 is a diagrammatic plan view of a haulage under construction illustrating a drilling rig in position adjacent to a blasting face;

Figure 2 is a diagrammatic perspective view of the haulage and drilling rig illustrated in Figure 1;

Figure 3 is a cross sectional side view of the tool positioning aid of the invention; and

Figure 4 shows a typical grid screen incorporated in the positioning aid of Figure 3.

## DESCRIPTION OF EMBODIMENTS

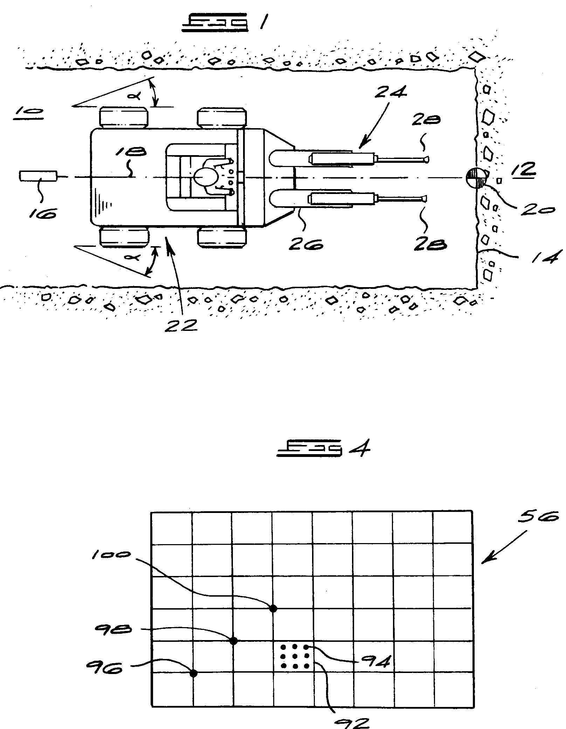

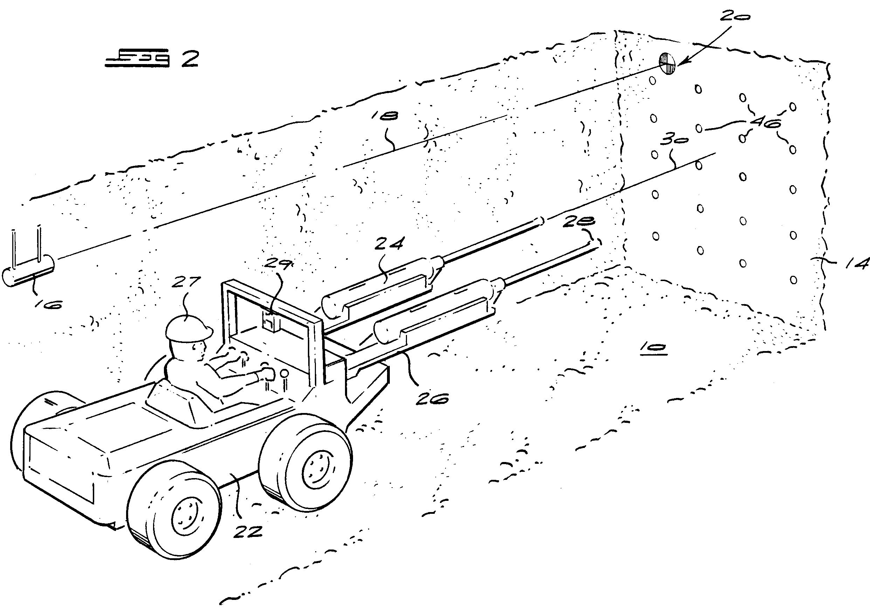

In the diagrams of Figures 1 and 2, a new haulage 10 is shown in the process of construction. The haulage is being developed into the rock 12 by means of a progressive blast face 14. A surveyor's laser 16 provides a reference beam 18 which projects a reference mark 20 on the progressively receding blast face 14.

Prior to blasting, the blast face 14 is drilled, on a predetermined drill pattern (which will be described below), by an operator using a drilling rig 22.

The drilling rig is mechanised and motorised and carries one or more rock drills 24 on articulated booms 26 which may be manipulated pneumatically or hydraulically by the operator of the rig 22.

In referring to "tool positioning" or "tool placement", it is intended, in this example, to refer to the placement or positioning of the drill tips 28 of the rock drills 24 on the blast face 14.

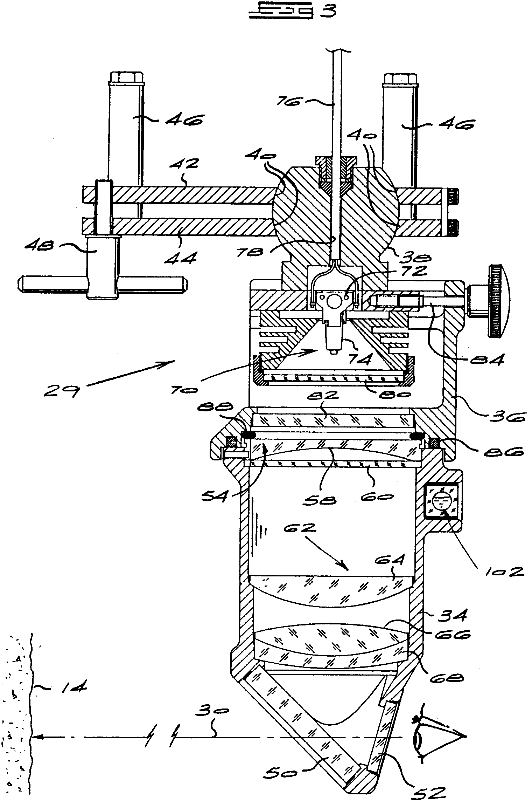

Referring now to Figure 3, a tool positioning aid 29 is placed in the line of sight 30 between the eye of the operator 32 of the drilling 22 and the blast face 14. The positioning aid has a lower housing 34 which is detachably mounted to an upper housing 36. The upper housing 36 in turn has a ball connector 38 extending from its upper end, which swivels within a complemental socket arrangement 40 formed within a base plate 42 and an adjustable locking plate 44. The base plate 42 is in turn bolted to the drilling rig by means of bolts 46. The locking plate 44 is mounted adjustably to the base plate 42 by means of a locking screw 48. Loosening of the locking screw 48 permits free pivotal movement of the ball connector 38 within the socket arrangement 40.

Mounted at a slant angle of approximately 45° towards the lower end of the lower housing 34 is a beam splitter screen 50, which is in the form of a pane of glass. A viewing window 52 is mounted towards the lower end of the lower housing 34, both the beam splitter screen 50 and the window 52 lying on the line of sight 30.

A replaceable grid screen lens 54 is located at the upper end of the lower housing 34. A grid screen pattern, such as that indicated at 56 in Figure 4, is etched into the concave surface 58 of the lens. A red filter 60 is positioned directly in front of the grid screen lens 54, and a lens arrangement 62, which is constituted by a convex lens 64, a bi-convex lens 66 and a concavo-convex lens 58 is mounted within the lower housing 34 between the beam splitter screen 50 and the filter 60.

The upper housing 36 houses a light source 70 which includes a light fitting 72 and a light bulb 74. The light source 70 is powered by an electrical lead 76 which extends through a bore 78 formed in the ball connector 38. A protective glass cover 80 is mounted in front of the light bulb 74, and a further glass window 82 is interposed between the cover 80 and the grid screen lens 58. The upper housing 36 is mounted detachably to the ball connector 38 by means of a mounting screw 84, so as to facilitate the changing of the light bulb 74.

The lower housing 34 is screwed onto the upper housing 36, an O-ring 86 providing an effective seal between the respective housings. A further O-ring 88 is used to cushion the grid screen lens 58, and to retain it in position. Replacement of the grid screen lens 58 is easily effected by merely unlatching the lower housing 34 from the upper housing 36.

In Figure 5, the typical grid screen 56 is shown having a rectangular lead pattern 90. Located within one of the blocks 92 of the grid pattern is an arrangement of dots 94, which are representative of the required blast pattern.

Three further dots or reference alignment marks 96, 98 and 100 are arranged diagonally at adjacent interstices in the grid pattern to the left of the block 92.

Referring back to Figure 3, the light source 70 shines through the grid screen lens 54, and an image of the grid screen pattern 56 is focused by the less arrangement 62, and is projected onto the beam splitter screen 50. The lens arrangement 62 is permanently adjusted to focus the grid screen pattern 56 onto the beam splitter screen so that it appears to originate as a virtual image 101 from a predetermined focus plane on the tool side of the screen. The focus plane corresponds to the approximate plane of the blast face 14. It will be appreciated that the grid screen pattern 56 will not be projected physically onto the blast face 14. Instead, it will appear to the operator 32, when he looks through the beam splitter screen 50, that the grid screen pattern is superimposed as a virtual image 101 on the rock of the blast face 14. By etching the grid screen pattern 56 onto the concave surface 58 of the grid screen lens 54, the lens arrangement 62 is considerably simplified, as the concave surface 58 compensates for abberation of the pattern 56 caused by fringing effects.

The operator visually superimposes one of the reference alignment marks 96, 98 or 100 on the level reference mark 20 projected or marked on the rock face 14. In order to the align the marks correctly, the operator will loosen the locking screw 48 and swivel the tool positioning aid into position. A levelling bubble 102 is located within the lower housing 34 to ensure that the positioning aid is maintained in a horizontal position.

The necessity for the alignment mechanism arises from the fact that the drilling rig 22 may be angled in the haulage relative to the reference line 18. As long as the angle of approach of the drilling rig 22 falls within a predetermined deviation ($2\alpha$ in Figure 1), then by merely adjusting the angle of the beam splitter screen 50 by releasing and subsequently locking the alignment mechanism, the simulated pattern 101 projected on the rock face 14 can be lined up in correct alignment with the reference mark 20. The permitted deviation from the reference beam 18 will depend on the angular correction capabilities of the articulated beams 26. In known drilling rigs, an angle of 20° is well within their manipulation capabilities. In this machine, a deviation of 10° to one or the other side of the reference beam 18 will therefore constitute an acceptable deviation. Similarly, the levelling bubble 102 assists in maintaining the tool positioning aid horizontal in the event of the floor of the haulage not being level.

In using the device, the operator merely drives the drilling rig 22 up to the rock face 14 and positions the drilling rig 22, by means of optical or physical measurement devices, so that the beam splitter screen 50 is at a predetermined distance from the blast face 14. One of the reference marks 96 projected from the grid screen lens 54 onto the beam splitter screen 50 is now aligned with the reference level mark 20 projected on the blast face 14 by means of the surveyor's laser 16. The reference mark 20 may also be in the form of a pre-printed surveyors reference mark.

It will be appreciated that the operator, or the qualified miner assisting him, lines up a virtual image (which appears to the operator to be superimposed on the rock face 14) with the actual projected reference mark 20, in order to obtain the correctly aligned virtual image 101 on the rock face 14. He now merely advances the drill tip or tips to each tool placement mark (as he sees it) constituted by one of the dots 94, and commences drilling.

It is critical that the correct grid screen lens be used in order to achieve the desired blast pattern. Not only the configuration of the pattern, but also the pattern size, is crucial. For instance, if a blast pattern of a particular size is required for drilling blast holes in a blast face, a drilling rig in which the operator is positioned 4m from the blast face will require a grid pattern lens which is of a different dimension to that used in a drilling rig in which the operator is positioned, say, 8m from the blast face. The grid screen lens used for the 8m drilling rig will need to have a pattern etched on to it which is proportionately smaller than the grid screen lens used in respect of the 4m drilling rig.

A series of grid screen lenses therefore needs to be manufactured, not only in respect of different blast pattern configurations, but also to cater for drilling rigs which are positioned at different distances from the blast face. The correct grid screen size in respect of a particular distance is calculated using a computer, which simulates the blast pattern, as it appears to an operator on the blast face, when positioned a predetermined distance away from the blast face, and generates an appropriately sized grid screen.

Consequently, it is essential that the distance between the blast face and the beam splitter screen should be measured with reasonable accuracy prior to drilling, in order to enable the operator to select the correct grid screen lens. In order to ensure that unauthorised tampering or interchanging of the grid screen lens does not occur, the lower housing 34 may be locked to the upper housing 36, thereby permitting only authorised access to the grid screen lens 58. In a further possible embodiment, the lens arrangement 62 may be substituted by a zoom lens arrangement, which could be manipulated in order to increase or to decrease the size of the image of the tool position indicating pattern. Distances could be marked on the zoom lens arrangement, which would enable the operator to adjust the zoom lens arrangement until the distance indicated thereon corresponds to the distance between the beam splitter screen and the blast face.

In yet a further possible embodiment, the light source 70 could be replaced by a miner's headlamp which is shone through the lens arrangement 62 via one or more mirrors.

Once holes have been drilled on all the virtual marks, the drilling rig is removed for blasting. Once blasting has been completed, the whole process is repeated without the requirement for actual marking of the face, other than possibly a new surveyor's reference mark.

The tool positioning aid of the invention makes it possible for a qualified miner to check the drill hole positions after drilling but prior to blasting, something which has not been possible to date due to flaking of paint marks during drilling operations.

**Claims**

1. A tool positioning aid characterized in that it comprises:
   a) image superimposing means (29) for superimposing a virtual image (101) of a tool position indicating pattern (56) onto a workpiece (14), the image superimposing means (29) including;
   i a first screen (54), having a tool position indicating pattern (56) formed thereon;
   ii a second screen (50) for interposition in the line of sight between the working end (28) of the tool (22) and an operator (32) thereof;
   iii projection means (62,70) for projecting an image (101) of the first screen (54) onto the second screen (50) such that the tool position indicating pattern (56) appears to be superimposed on the workpiece (14) when viewed by the operator (32) along the line of sight (30);
   b) an alignment mechanism (38,40,42,44) for aligning the virtual image (101) with a reference mark (20) on the workpiece (14).

2. A tool positioning aid as claimed in claim 1 characterized in that the projection means (62,70) includes a light source (70) positioned behind the first screen (54) and an arrangement of lenses (62) located in front of the first screen (54) for focusing the image of the first screen onto the second screen (50).

3. A tool positioning aid as claimed in claim 1 characterised in that the first screen (54) includes at least one alignment mark (96,98,100) for aligning the tool position indicating image (101) with a corresponding reference mark (20) on the workpiece.

4. A tool positioning aid as claimed in any one of the preceding claims characterized in that a viewing window (52) is provided along the line of sight (30) a predetermined distance away from the second screen (50), and the projection means (62,70) are adjusted so that the virtual image (101) appears to lie in a focal plane which is substantially coplanar with a plane in which the workpiece ( 14) lies, when the operator (32) views the virtual image ( 101) through the viewing window (52).

5. A tool positioning aid as claimed in any one of the preceding claims characterized in that the alignment mechanism (38,40,42,44) is constituted by a mounting arrangement (38,40) for allowing swivelling of the second screen (50) in all directions, and locking means (44,48) for releasably locking the mounting arrangement relative to a fixture.

6. A tool positioning aid as claimed in any one of the preceding claims characterized in that the tool is a drilling rig (22).

7. A tool positioning aid as claimed in any one of the preceding claims characterized in that the workpiece is a blast face (14), and the position indicating pattern is a blast pattern (101) indicating the position of blast holes.

8. A tool positioning aid as claimed in any one of the preceding claims, characterized in that a plurality of interchangeable first screens (54) are provided, each screen having a pattern (56) of a different configuration and/or a different magnitude in order to cater for varying distances of the tool (22) from the workpiece (14).

9. A tool positioning aid as claimed in any one of the preceding claims characterized in that the first screen is in the form of a concave grid screen lens (54) having a grid screen pattern (56) formed on its concave surface (58).

10. A tool positioning aid as claimed in claim 1 characterized in that the second screen is in the form of a beam splitter screen (50).

11. A method of positioning a tool characterized in that the method comprises the steps of:
    a) superimposing a virtual image (101) of a tool position indicating pattern (56) onto a workpiece (14), by:
    i) selecting a first screen (54) having a tool position indicating pattern (56) formed therein;
    ii) interposing a second screen (50) in the line of sight (30) between the working end (28) of the tool (22) and the operator (32) thereof;
    iii) projecting an image of the first screen (54) onto the second screen (50) such that the tool position indicating pattern (56) appears to be superimposed on the workpiece (14) when viewed by the operator (32) along the line of sight (30); and
    b) positioning the working end (28) of the tool (22) in accordance with the image ( 101) of the tool position indicating pattern (56).

12. A method as claimed in claim 11 which is characterized in that it includes the further steps of providing a reference mark (20) on the workpiece (14), and aligning the virtual image (101) of the tool indicating pattern (56) with the reference mark (20) prior to positioning of the working end (28) of the tool (22).

13. A method as claimed in either one of claims 11 or 12 which is characterized in that it includes the reiterative steps of positioning the working end (28) of the tool (22) in accordance with a point defined by the virtual image (101) of the tool position indicating pattern (56), advancing the working end (28) of the tool (22) into the workpiece (14), and repositioning the working end (28) of the tool (22) in accordance with a further point defined by the virtual image (101) of the tool position indicating pattern (56).

14. A method as claimed in claims 11 to 14 which is characterized in that it includes the initial steps of measuring the distance between the workpiece (14) and the second screen (50), and selecting a first screen (54) in accordance with the measured distance.

15. A method as claimed in claims 11 to 14 which is characterized in that the tool is a drilling rig 22, and the position indicating pattern (56) is a blast pattern for indicating the position of blast holes to be drilled in a rock face (14), the method including the further step of checking the position of the drilled blast holes using the virtual image (101) of the tool position indicating pattern (56) prior to charging of the holes.

Fig 1

Fig 4

FIG 2

FIG 3

## European Patent Office

## EUROPEAN SEARCH REPORT

Application Number

EP 91 30 7639

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| A | DE-A-2 702 668 (SACK)<br>* Figures 1,2; claims 1,4 * | 1,11 | G 01 C 15/00 |
| A | US-A-3 941 486 (TYLER)<br>* Figures 7,8; abstract; claim 1 * | 1,11 | |
| A | US-A-3 431 049 (NORDGREN)<br>* Whole document * | 7,15 | |
| A | WO-A-8 001 003 (NORDGREN)<br>* Figure 3; abstract * | 7,15 | |
| | | | TECHNICAL FIELDS SEARCHED (Int. Cl.5)<br><br>G 01 C<br>G 01 B<br>E 21 D |

The present search report has been drawn up for all claims

| Place of search | Date of completion of the search | Examiner |
|---|---|---|
| THE HAGUE | 11-11-1991 | KOLBE W.H. |

EPO FORM 1503 03.82 (P0401)